# EUROPEAN PATENT APPLICATION

(11) **EP 4 617 845 A1**
(43) Date of publication of application: **17.09.2025**
(21) Application number: 23890361.1
(22) Date of filing: 04.09.2023
(51) Int. Cl.: G06F 3/06, H04L 47/6275

(54) **DATA READ-WRITE METHOD AND RELATED APPARATUS**

(30) Priority: 18.11.2022 CN 202211447582; 15.02.2023 CN 202310157832
(71) Applicant: Huawei Technologies Co., Ltd., Shenzhen, Guangdong 518129 (CN)
(72) Inventor: LENG, Chao, Shenzhen, Guangdong 518129 (CN)
(74) Representative: Gill Jennings & Every LLP
(86) International application number: PCT/CN2023/116702
(87) International publication number: WO 2024/103924

(57) **Abstract**

A data read/write method is applied to an electronic device, for example, a host or a storage device. **In** the method, two send queues with different processing priorities are simultaneously created, a write command with a large data amount is placed in a first send queue with a lower processing priority, and a non-write command with a small data amount is placed in a second send queue with a higher processing priority, so that hardware in the electronic device can preferentially send the non-write command in the second send queue, to ensure that a sending delay of the non-write command (for example, a read command used for implementing data write) is not affected by the write command, thereby effectively reducing a data write delay.

## Description

This application claims priorities to Chinese Patent Application No. 202211447582.9, filed with the China National Intellectual Property Administration on November 18, 2022 and entitled "REMOTE DIRECT MEMORY ACCESS OVER CONVERGED ETHERNET ROCE ACCESS METHOD", and to Chinese Patent Application No. 202310157832.3, filed with the China National Intellectual Property Administration on February 15, 2023 and entitled "DATA READ/WRITE METHOD AND RELATED APPARATUS", both of which are incorporated herein by reference in their entireties.

### TECHNICAL FIELD

This application relates to the field of storage technologies, and in particular, to a data read/write method and a related apparatus.

### BACKGROUND

With development of storage technologies, especially in a solid-state drive (SSD) that uses a flash (Flash) as a storage medium, an interface standard designed for a conventional mechanical hard disk cannot meet a requirement of a storage device, and becomes a bottleneck that limits a processing capability of the storage device. Non-volatile memory express (NVMe) emerges. The NVMe is an interface specification that allows communication between a host (Host) and a non-volatile memory (NVM) subsystem, optimizes data read/write of a solid-state storage, and has advantages of high performance and a low access delay

With wide application of the NVMe, NVMe over remote direct memory access (Remote Direct Memory Access, RDMA) (NVMe over RDMA) also emerges. The NVMe over RDMA is mainly used for a high-performance and low-delay service, for example, an online transaction service, and is very sensitive to a data read/write delay.

However, in a current NVMe over RDMAhybrid read/write scenario, a data write delay is easily affected by data read, causing a high data write delay.

### SUMMARY

This application provides a data read/write method, to ensure that a data write delay is not affected by data read, thereby effectively reducing the data write delay.

A first aspect of this application provides a data read/write method. The method may be applied to an electronic device that performs data read/write, for example, a host or a storage device. The method specifically includes: The electronic device receives a first access command, where the first access command is a write command. In other words, the first access command is used for requesting to write data into another device. The first access command may be a first access command generated by a software module in the electronic device, and a hardware module in the electronic device is responsible for sending the first access command.

The electronic device places the first access command in a first send queue in response to a case in which the first access command is the write command. For example, the first send queue is a data structure in memory space of the electronic device, and is used for caching to-be-sent content in the electronic device.

In addition, the electronic device further receives a second access command, where the second access command is a non-write command. In other words, the second access command is not a write command used for requesting to write data into another device.

The electronic device places the second access command in a second send queue in response to a case in which the second access command is the non-write command. The second send queue may also be a data structure in the memory space of the electronic device, and is used for caching to-be-sent content in the electronic device. In addition, a processing priority of the second send queue is higher than a processing priority of the first send queue. In other words, when there is to-be-processed content in both the first send queue and the second send queue, the hardware module (for example, a network adapter) in the electronic device preferentially sends content in the second send queue.

In this solution, two send queues with different processing priorities are simultaneously created, a write command with a large data amount is placed in a first send queue with a lower processing priority, and a non-write command with a small data amount is placed in a second send queue with a higher processing priority, so that hardware in the electronic device can preferentially send the non-write command in the second send queue, to ensure that a sending delay of the non-write command (for example, a read command used for implementing data write) is not affected by the write command, thereby effectively reducing a data write delay.

In a possible implementation, the first access command and the second access command are remote direct memory access over converged Ethernet (Remote Direct Memory Access over Converged Ethernet, RoCE) access commands.

In a possible implementation, the first send queue and the second send queue belong to a same send queue pair. In other words, both the first send queue and the second send queue are send queues created by the electronic device to communicate with a same object.

In a possible implementation, the first access command includes first data, and the first access command is used for requesting to write the first data. For example, when the method is applied to the storage device, the first access command may be used for requesting to write, into the host, the first data carried in the first access command.

In a possible implementation, the second access command is used for requesting to read data; or
the second access command indicates to complete data read.

In other words, the second access command does not carry data that needs to be written into a peer device, and a data amount of the second access command is small, so that the electronic device can quickly complete sending of the second access command.

In a possible implementation, content in the first send queue is sent when there is no to-be-sent content in the second send queue. In other words, the processing priority of the first send queue is always higher than the processing priority of the second send queue. The electronic device always preferentially sends a message in the first send queue when there is a to-be-sent message in the first send queue. In addition, the electronic device sends a message in the second send queue only when there is no to-be-sent message in the first send queue.

In this solution, the processing priority of the second send queue is set to an absolutely high priority, so that it can be ensured that a message related to data write is always preferentially sent in various scenarios, to avoid a case in which a data write delay is affected by a data read delay, and ensure data write efficiency.

In a possible implementation, the electronic device may temporarily stop sending the content in the second send queue, and send the content in the first send queue when a data amount of continuously sent content in the second send queue reaches a preset data amount or time for continuously sending content in the second send queue reaches preset duration.

In this solution, on the basis of ensuring that the message in the second send queue is preferentially sent, message content in the first send queue is sent when time for continuously sending messages in the second send queue reaches specific duration or a data amount of continuously sent messages in the second send queue reaches a specific data amount, to avoid a case in which the message content in the first send queue waits for excessively long time in a queue, and ensure that a data read delay is not greatly affected.

In a possible implementation, the method further includes: The electronic device receives a connection establishment request sent by a peer device, where the connection establishment request is used for requesting to establish a connection to the electronic device. In response to the connection establishment request, the electronic device creates the first send queue and the second send queue, and configures the processing priority of the second send queue to be higher than the processing priority of the first send queue.

A second aspect of this application provides a data read/write apparatus, including:
a receiving module, configured to receive a first access command, where the first access command is a write command; and
a processing module, configured to place the first access command in a first send queue.

The receiving module is further configured to receive a second access command, where the second access command is a non-write command.

The processing module is further configured to place the second access command in a second send queue, where a processing priority of the second send queue is higher than a processing priority of the first send queue.

In a possible implementation, the first access command and the second access command are RoCE access commands.

In a possible implementation, the first send queue and the second send queue belong to a same send queue pair.

In a possible implementation, the first access command includes first data, and the first access command is used for requesting to write the first data.

In a possible implementation, the second access command is used for requesting to read data; or
the second access command indicates to complete data read.

In a possible implementation, the apparatus further includes: a sending module, configured to send content in the first send queue when there is no to-be-sent content in the second send queue.

In a possible implementation, the apparatus further includes: a sending module, configured to send the content in the first send queue when a data amount of continuously sent content in the second send queue reaches a preset data amount or time for continuously sending content in the second send queue reaches preset duration.

In a possible implementation, the receiving module is further configured to receive a connection establishment request, where the connection establishment request is used for requesting to establish a connection.

The processing module is further configured to: in response to the connection establishment request, create the first send queue and the second send queue, and configure the processing priority of the second send queue to be higher than the processing priority of the first send queue.

A third aspect of this application provides an electronic device, including a storage medium and a processor. The storage medium stores code, the processor is configured to execute the code, and when the code is executed, the electronic device performs the method according to any implementation of the first aspect.

A fourth aspect of this application provides a computer storage medium. The computer storage medium stores instructions, and when the instructions are executed by a computer, the computer is enabled to perform the method according to any implementation of the first aspect.

A fifth aspect of this application provides a computer program product. The computer program product stores instructions, and when the instructions are executed by a computer, the computer is enabled to implement the method according to any implementation of the first aspect.

A sixth aspect of this application provides a chip. The chip includes a processor and a communication interface. The communication interface is configured to communicate with a module other than the chip, and the processor is configured to run a computer program or instructions, to enable an apparatus in which the chip is installed to perform the method according to any implementation of the first aspect.

For technical effects brought by any implementation of the second aspect to the sixth aspect, refer to technical effects brought by different implementations of the first aspect. Details are not described herein again.

### BRIEF DESCRIPTION OF DRAWINGS

FIG. 1 is a diagram of an RDMA architecture according to an embodiment of this application;
FIG. 2 is a diagram of an RDMA communication principle according to an embodiment of this application;
FIG. 3 is a diagram of sending an SQ according to an embodiment of this application;
FIG. 4 is a diagram of an application scenario of a data read/write method according to an embodiment of this application;
FIG. 5 is a schematic flowchart of a data read/write method 500 according to an embodiment of this application;
FIG. 6 is another schematic flowchart of a data read/write method 600 according to an embodiment of this application;
FIG. 7 is a diagram of sending messages in a first send queue and a second send queue according to an embodiment of this application;
FIG. 8 is a diagram of a system architecture of a storage device according to an embodiment of this application;
FIG. 9 is a schematic flowchart of establishing a connection between a host and a storage device according to an embodiment of this application;
FIG. 10 is a schematic flowchart of writing data into a storage device by a host according to an embodiment of this application;
FIG. 11 is a schematic flowchart of reading data in a storage device by a host according to an embodiment of this application;
FIG. 12 is a diagram of a structure of a storage device according to an embodiment of this application;
FIG. 13 is a diagram of a structure of a storage device according to an embodiment of this application; and
FIG. 14 is a diagram of a structure of a computer-readable storage medium according to an embodiment of this application.

### DESCRIPTION OF EMBODIMENTS

The following describes embodiments of this application with reference to accompanying drawings. Apparently, the described embodiments are merely some rather than all of embodiments of this application. A person of ordinary skill in the art may learn that, with development of technologies and emergence of a new scenario, technical solutions provided in embodiments of this application are also applicable to a similar technical problem.

In this specification, the claims, and the accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in an order other than content illustrated or described herein.

Moreover, the terms "include", "have" and any other variants are intended to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following first describes some technical terms used in embodiments of this application.

(1) NVMe

The NVMe is a high-performance and highly scalable storage protocol. The essence of the NVMe is to establish paths between a plurality of hosts (hosts) and a storage device. The NVMe replaces an original advanced host controller interface (Advanced Host Controller Interface, AHCI) specification, and redefines a processing command at a software layer; and a small computer system interface (SCSI)/advanced technology attachment (ATA) command specification is no longer used. In addition, the NVMe uses a high-speed serial computer extended bus standard (PCIe) bus in a computer or a server to directly connect a device supporting the NVMe to the computer, to reduce overheads of a central processing unit (CPU), reduce a delay, and increase a quantity of input/output operations per second (IOPS) and a throughput.

The storage device in embodiments may be based on the NVMe specification. Therefore, the storage device is also referred to as an NVMe subsystem (NVM subsystem).

### (2) NVMe over Fabrics (NVMe-oF)

The NVMe-oF is a high-speed storage protocol based on the NVMe specification, and is used for accessing a solid-state storage across a network structure (for example, an ethernet, a fiber channel, or InfiniBand). The NVMe-oF defines a general-purpose architecture, and is used for using an NVMe message-based command to interface with a storage system. The protocol may support a plurality of NVMe devices and may extend distances between the NVMe devices and subsystems of the NVMe devices.

Simply, the NVMe-oF uses a fabric network to carry the NVMe protocol, making high-performance and low-delay remote access to an SSD possible. Fabrics may be a network structure, for example, an ethernet, a fiber channel, or InfiniBand.

### (3) Remote direct memory access (English: remote direct memory access, RDMA)

The RDMA is a technology for accessing data in a memory of a remote host by bypassing an operating system kernel of the remote host. Because the operating system is bypassed, not only a large quantity of CPU resources are saved, but also a system throughput is increased and a network communication delay of the system is reduced. The RDMA is especially suitable for wide application in a massively parallel computer cluster.

The RDMA has the following characteristics: 1. Data is transmitted between a network and a remote machine. 2. All content related to sending and transmission is offloaded to an intelligent network adapter without participation of the operating system kernel. 3. Data is directly transmitted between a user space virtual memory and the intelligent network adapter, the operating system kernel is not involved, and no extra data is moved or copied.

Currently, there are roughly three types of RDMA networks, that is, an InfiniBand network, an RDMA over converged Ethernet (RDMA over Converged Ethernet, RoCE) network, and an internet wide area RDMA protocol (internet Wide Area RDMA Protocol, iWARP) network, respectively. InfiniBand is a network designed for the RDMA, to ensure reliable transmission in terms of hardware, and a network adapter and a switch that support the technology are required. The RoCE and the iWARP are both ethernet-based RDMA technologies, and only special network adapters need to be configured. In terms of performance, the InfiniBand network has best performance, but prices of the network adapter and the switch are very high. The RoCE and the iWARP require only special network adapters, and prices are much lower.

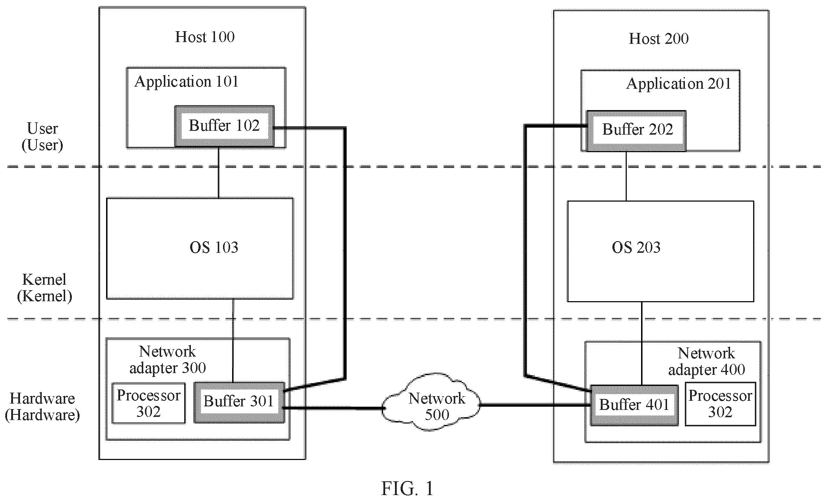

FIG. 1 is a diagram of an RDMA architecture according to an embodiment of this application. In the RDMA architecture shown in FIG. 1, an example in which an RDMA write request message is executed is used, and a working procedure of the RDMA write request message is as follows: (1) When an application 101 in a host 100 initiates the RDMA write request message, a local network adapter 300 reads the request message from a buffer 102 into a buffer 301 of the network adapter 300. In this process, an operating system 103 is bypassed. The RDMA write request message includes a virtual address, a memory key, and to-be-written data. The virtual address is an address of virtual storage space that can be accessed by the local network adapter 300, and the virtual storage space is obtained by mapping a memory of a host 200. The memory key is used for determining access permission of the network adapter 300 for the memory of the host 200. (2) A processor 302 of the network adapter 300 sends the RDMA write request to a network adapter 400 via a network 500. (3) The network adapter 400 determines a memory key, and writes data into the memory of the host 200 based on the memory key. A structure of the host 200 is symmetric to a structure of the host 100, and a process of processing an RDMA read/write request by the host 200 is also consistent with that of the host 100. An internal structure of the host 200 is not described herein in detail.

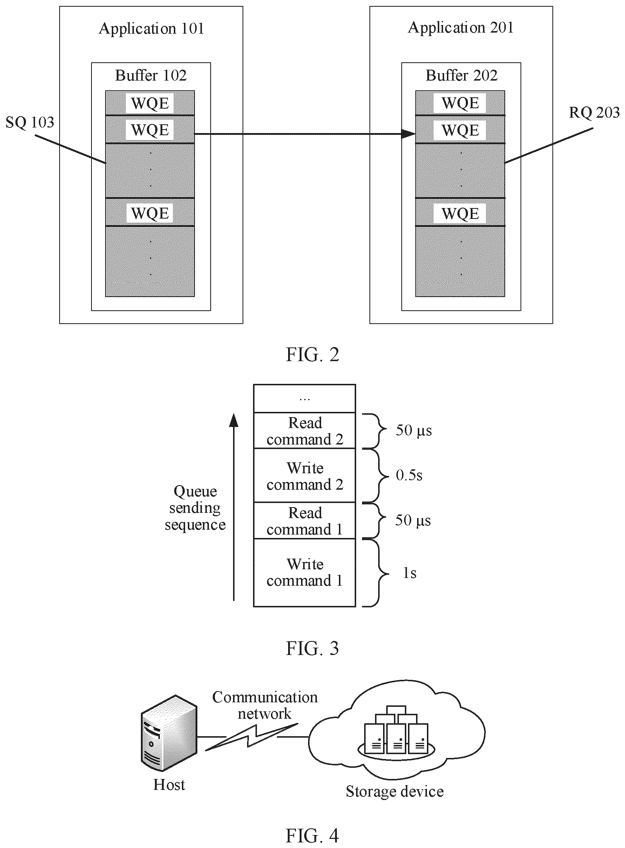

In the RDMA, a message service is specifically established on a channel-input/output (Channel-I/O) connection created between a local application and a remote application serving as two communication parties. When applications need to communicate with each other, a channel connection is created. A first endpoint and a last endpoint of each channel are two queue pairs (Queue Pairs, QPs). Each QP includes a send queue (Send Queue, SQ) and a receive queue (Receive Queue, RQ). FIG. 2 is a diagram of an RDMA communication principle according to an embodiment of this application. Either communication party may be connected to an RQ of a peer end by using an SQ of a local end, and send message content in the SQ of the local end to the RQ of the peer end, to implement message exchange between two communication parties.

The RDMA further provides a set of software transport interfaces (software transport interfaces) for a user to create a work request (Work Request, WR). The WR describes message content that an application expects to transmit to the peer end. A specific queue (Work Queue, WQ) in the QP is posted to the WR. In the WQ, the WR of the user is converted to be in a work queue element (WQE) format, and waits to be scheduled and parsed by a network adapter, and a message is read from a buffer that the WQE points to and is sent to a remote host.

Simply, the QP is a virtual interface between hardware and software. The QP is essentially a queue structure that stores tasks (that is, the WQE) delivered by the software to the hardware in sequence. The WQE includes information such as a location from which data is obtained, a length of the data, and a destination to which the data is sent. The QP is mapped to virtual address space of an application, so that the application can directly access the network adapter based on the QP.

### (4) NVMe over RDMA (NVMe over RDMA)

The NVMe over RDMA is a type of NVMe over Fabrics and is also of a most commonly used type. In the NVMe over RDMA, a most widely used protocol is NVMe over RoCE. Mainstream storage device vendors in the industry all launch storage devices that support the NVMe over RoCE.

A principle of the NVMe over RDMA is simple, and is to map an NVMe I/O queue to an RDMA QP connection to implement I/O interaction by using three semantics, that is, RDMA SEND, RDMA WRITE, and RDMA READ.

### (5) Host

In embodiments, the host may be a device that accesses a storage device to access data in the storage device. The host may be virtual, for example, a virtual machine. The host may alternatively be a physical device, for example, may be a device such as a personal computer, a server, a notebook computer, a smartphone, or a tablet computer.

### (6) Host bus adapter (Host Bus Adapter, HBA)

The HBA is also referred to as a fiber channel card, is a board that can be inserted into a computer, server, or a mainframe, and connects a computer to a storage or a storage network through a fiber channel or an SCSI. Specifically, the HBA is a circuit board or an integrated circuit adapter that provides I/O processing and a physical connection between a server and a storage apparatus, and can reduce load of a main processor in data storage and data processing, to improve performance of the server.

Currently, when the storage device performs message exchange with the host based on the NVMe over RDMA, a software application in the storage device usually creates a QP. One QP includes one SQ and one RQ. The software application in the storage device places a message that needs to be sent to the host in the SQ, to enable the hardware to fetch the message from the SQ and sends the message to the host. In addition, the software application in the storage device further obtains, by using the RQ, the message sent by the host. In this way, the storage device can implement message exchange with the host by using a pair of QPs, so that the host can perform a data read/write operation on the storage device.

However, in a current NVMe over RDMAhybrid read/write scenario, a data write delay is easily affected by data read, causing a high data write delay.

Specifically, when the host needs to write data into the storage device, the host first sends a write request message to the storage device. After receiving the write request message and preparing data receiving space based on an indication of the write request message, the storage device sends a read command to the host to request to read data in the host, to write data from the host to the storage device. In other words, in a write scenario, the storage device needs to send a read command to the host.

When the host needs to read data in the storage device, the host sends a read request message to the storage device. After receiving the read request message, the storage device generates a write command based on data that needs to be read and that is indicated by the read request message. The write command carries data that needs to be read by the host. Then, the storage device sends the write command to the host, to request to write data to the host, so as to read the data from the host to the storage device. In other words, in a read scenario, the storage device needs to send a write command to the host.

In an NVMe over RDMA scenario, both a read command and a write command that are sent by the storage device to the host need to be placed in the SQ in the storage device, so that hardware can sequentially extract, from the SQ, messages that need to be sent to the host. In a hybrid read/write scenario, the SQ includes large quantities of read commands and write commands. In addition, the write command usually carries a large amount of data. Therefore, a sending delay of the write command is usually large. Hardware in the storage device sequentially sends messages in the SQ. Therefore, the write command in the SQ affects sending of a read command after the write command, so that a sending delay of the read command is affected by a sending delay of the write command.

In addition, in most hybrid read/write scenarios, data read services are more than data write services. For example, in a typical hybrid read/write scenario, a ratio of data read traffic to data write traffic is 7:3. In this case, in the SQ of the storage device, a quantity of write commands related to a data read service is far greater than a quantity of read commands related to the data write service, so that the data write delay is greatly affected by the data read delay.

For example, FIG. 3 is a diagram of sending an SQ according to an embodiment of this application. As shown in FIG. 3, a write command 1, a read command 1, a write command 2, and a read command 2 are sequentially placed in the SQ, and network adapter hardware in a storage device needs to sequentially send the commands in the SQ based on the foregoing sequence. Because the write command 1 and the write command 2 carry a large amount of data, a sending delay is high. Because the read command 1 and the read command 2 have small data amounts, a sending delay is low. Specifically, sending delays of the write command 1, the read command 1, the write command 2, and the read command 2 are successively 1 second (s), 50 microseconds (µs), 0.5s, and 50 µs. It can be learned that both the sending delay of the read command 1 and the sending delay of the read command 2 are very low. However, because both the read command 1 and the read command 2 are arranged after the write command, an actual sending delay of the read command 1 is a sum of the sending delay of the write command 1 and the sending delay of the read command 1, and an actual sending delay of the read command 2 is a sum of the sending delays of the foregoing four commands. It can be learned that a read command with a small data amount is easily affected by a sending delay of a write command with a large data amount, so that a sending delay of the read command becomes high.

In other words, for the host, in a hybrid read/write scenario, a data write delay is easily affected by data read, causing a high data write delay.

In addition, it should be noted that, the foregoing is described by using a process in which the host performs data read/write. Actually, the host and the storage device are two devices corresponding to each other, and read/write operations of the two devices correspond to each other. Specifically, for the storage device, a behavior of reading data from the storage device by the host may be actually understood as a process in which the storage device writes data into the host. A behavior of writing data into the storage device by the host may be actually understood as a process in which the storage device reads data from the host. In other words, for both parties in a data read/write process, a process in which a party A reads data from a party B is actually a process in which the party B writes data into the party A; and a process in which the party A writes data into the party B is actually a process in which the party B reads data from the party A.

In view of this, embodiments of this application provide a data read/write method. Two send queues with different processing priorities are simultaneously created, a write command with a large data amount is placed in a first send queue with a lower processing priority, and a non-write command with a small data amount is placed in a second send queue with a higher processing priority, so that hardware in the electronic device can preferentially send the non-write command in the second send queue, to ensure that a sending delay of the non-write command (for example, a read command used for implementing data write) is not affected by the write command, thereby effectively reducing a data write delay.

FIG. 4 is a diagram of an application scenario of a data read/write method according to an embodiment of this application. As shown in FIG. 4, a host communicates with a storage device via a communication network. The storage device stores data, and the host may send a read request message or a write request message to the storage device, to read/write the data in the storage device.

A specific form of the host includes, but is not limited to, a physical server or a virtual machine on a physical server. The physical server may be a computer device including components such as a CPU, a memory, and a network adapter and the like.

In an NVMe protocol, the storage device may also be usually referred to as an NVM subsystem. Specifically, the storage device may be an independent physical hard disk system, including a network adapter and at least one hard disk, and the network adapter is separately connected to the at least one hard disk. The hard disk in the storage device may be a storage medium having a storage function, for example, a solid-state drive (Solid-State Drive, SSD) or a hard disk drive (Hard Disk Drive, HDD). The network adapter in the storage device has a function of a network interface card, and may be a remote network interface card (Remote Network Interface Card, RNIC) in NVMe over Fabrics. The network adapter performs communication related to data transmission with the host via a communication network.

Specifically, the data read/write method provided in this embodiment may be applied to the host or the storage device in the scenario shown in FIG. 4. In other words, any party in a data read/write process is performed. This is not specifically limited in embodiments.

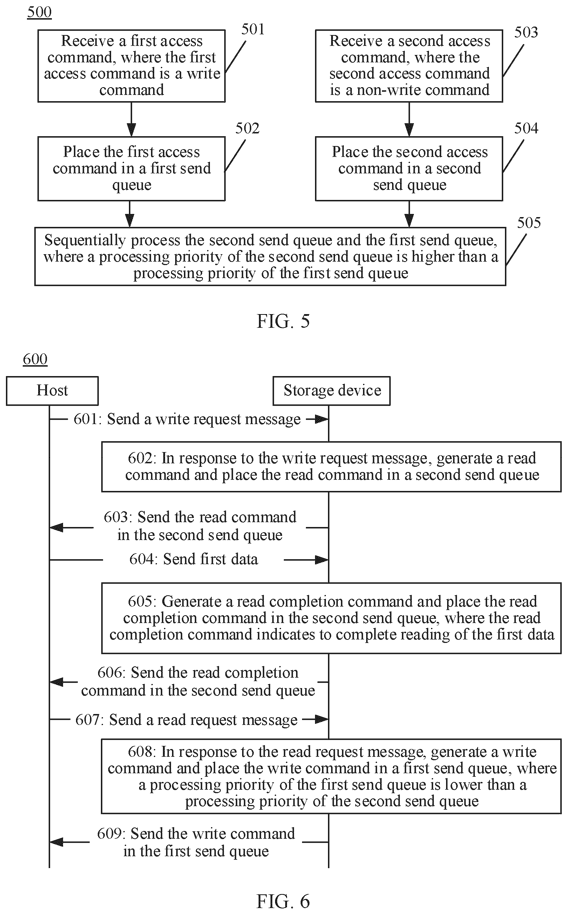

FIG. 5 is a schematic flowchart of a data read/write method 500 according to an embodiment of this application. As shown in FIG. 5, the data read/write method 500 includes the following steps 501 to 505.

Step 501: Receive a first access command, where the first access command is a write command.

In this embodiment, the data read/write method 500 may be applied to an electronic device, and the electronic device is any party, for example, a host or a storage device, participating in a data read/write process. In a process of performing data read/write, the electronic device may receive the first access command. The first access command may be a first access command generated by a software module in the electronic device, and a hardware module in the electronic device is responsible for sending the first access command.

In addition, the first access command is a write command. In other words, the first access command is used for requesting to write data into another device. For example, the first access command may include first data, and the first access command is used for requesting to write the first data. For example, when the method is applied to the storage device, the first access command may be used for requesting to write, into the host, the first data carried in the first access command.

Step 502: Place the first access command in a first send queue.

For example, the first send queue is a data structure in memory space of the electronic device, and is used for caching to-be-sent content in the electronic device. Because the hardware module (for example, a network adapter) in the electronic device that is responsible for sending has a bandwidth limit, the hardware module in the electronic device may fail to send, at a same moment, all content generated by the software module. Therefore, the electronic device may place the received first access command in the first send queue, so that the hardware module in the electronic device can sequentially send content in the first send queue.

Step 503: Receive a second access command, where the second access command is a non-write command.

In other words, the second access command is not a write command used for requesting to write data into another device.

For example, the second access command may be a read command, and is used for requesting to read data. Alternatively, the second access command may be a read completion command, and indicates that the electronic device has completed data read. The second access command may alternatively be a command of another type (for example, a control command) other than the write command. This is not specifically limited in embodiments.

Simply, the second access command does not carry data that needs to be written into a peer device, and a data amount of the second access command is small, so that the electronic device can quickly complete sending of the second access command.

Step 504: Place the second access command in a second send queue, where a processing priority of the second send queue is higher than a processing priority of the first send queue.

For example, the second send queue is a data structure in the memory space of the electronic device, and is used for caching to-be-sent content in the electronic device. In addition, the processing priority of the second send queue is higher than the processing priority of the first send queue. In other words, when there is to-be-processed content in both the first send queue and the second send queue, the hardware module (for example, a network adapter) in the electronic device preferentially sends content in the second send queue.

It should be noted that, in this embodiment, there is no limitation on a sequence between steps 501 and 502 and steps 503 and 504. The electronic device may first perform steps 501 and 502, and then perform steps 503 and 504; or may first perform steps 503 and 504, and then perform steps 501 and 052. Alternatively, the electronic device may synchronously perform steps 501 and 502 and steps 503 and 504.

Step 505: Sequentially process the second send queue and the first send queue.

In this embodiment, because the processing priority of the second send queue is higher than the processing priority of the first send queue, in a process of processing the second send queue and the first send queue, the electronic device preferentially sends the content in the second send queue, to ensure that a non-write command in the second send queue can be preferentially sent than a write command in the first send queue.

In this solution, two send queues with different processing priorities are simultaneously created, a write command with a large data amount is placed in a first send queue with a lower processing priority, and a non-write command with a small data amount is placed in a second send queue with a higher processing priority, so that hardware in the electronic device can preferentially send the non-write command in the second send queue, to ensure that a sending delay of the non-write command (for example, a read command used for implementing data write) is not affected by the write command, thereby effectively reducing a data write delay.

It is described above that when receiving different commands, the electronic device places different commands in send queues with different processing priorities, to avoid a case in which data write is affected by data read.

For ease of understanding, the following uses an example in which the data read/write method is applied to a storage device to describe in detail how the storage device interacts with a host, to avoid a case in which a data write delay of the storage device is affected by a data read delay.

FIG. 6 is a schematic flowchart of a data read/write method 600 according to an embodiment of this application. As shown in FIG. 6, the data read/write method 600 includes the following steps 601 to 606. Step 601: A host sends a write request message to a storage device, where the write request message is used for requesting to write data into the storage device.

In this embodiment, when the host needs to write data into the storage device, the host may send the write request message to the storage device, to request to write the data into the storage device. The write request message may include a source address of to-be-written data (that is, a source address of to-be-written data in the host), a destination address of the to-be-written data (that is, an address of the to-be-written data in the storage device), and a length of the to-be-written data.

Optionally, in this embodiment, the storage device may be based on the NVMe specification. In other words, the storage device is an NVMe storage device.

In addition, communication between the storage device and the host may be based on the RDMA protocol. In other words, the host implements data read/write in the storage device via an RDMA network. When the storage device is based on the NVMe specification, communication between the host and the storage device is based on NVMe over RDMA. For example, the host communicates with the storage device based on NVMe over RoCE. In addition, the storage device may alternatively communicate with the host based on another protocol. This is not specifically limited in embodiments.

Step 602: In response to the write request message, the storage device generates a read command and places the read command in a second send queue, where the read command is used for requesting to read data indicated in the write request message.

After receiving the write request message sent by the host, the storage device may prepare, based on the length of the to-be-written data indicated in the write request message, cache space used for receiving the data. After the cache space used for receiving data is prepared, the storage device may further generate a read command based on the write request message. The read command is used for requesting to read data indicated in the write request, in other words, read data in a source address indicated by the host in the write request message.

It should be noted that, for the storage device, reading data from the host by the storage device can implement a process of writing data from the host into the storage device. In other words, in a data write scenario, the storage device actually reads data from a host side.

After the storage device generates the read command, because the read command is a message (that is, a message used for writing data into the storage device) related to the write request message sent by the host, the storage device places the read command in the second send queue with a higher processing priority, to preferentially send the read command.

Specifically, a queue pair is created in the storage device. The queue pair includes both a first send queue and a second send queue, and a processing priority of the second send queue is higher than a processing priority of the first send queue. In other words, when there is to-be-processed message content in both the first send queue and the second send queue, hardware (for example, a network adapter) in the storage device preferentially sends message content in the second send queue.

In an actual application process, the storage device places, in the second send queue, a message (for example, the read command) related to data write, and places, in the first send queue, a message (for example, a write command generated by the storage device) related to data read, to ensure that the message related to data write is preferentially sent, in other words, to avoid a case in which a data write delay is affected by a data read delay.

Optionally, the first send queue and the second send queue in the storage device may be established in a process of establishing a connection between the storage device and the host.

For example, before step 601, the storage device receives a connection establishment request from the host, where the connection establishment request is used for requesting to establish a connection to the storage device. Then, in response to the connection establishment request sent by the host, the storage device creates a queue pair including a first send queue and a second send queue, and configures a processing priority of the first send queue to be higher than a processing priority of the second send queue. In this case, when the host needs to perform data read/write on the storage device subsequently, the first send queue and the second send queue on the storage device may implement an operation related to data read/write.

Generally, a queue pair is usually configured in the host to communicate with the storage device, and there is a unique mapping relationship between the queue pair configured in the host and the queue pair configured in the storage device. A receive queue in the queue pair configured in the host may be used for simultaneously receiving messages from both the first send queue and the second send queue of the storage device. In other words, one receive queue in the host may correspond to the first send queue and the second send queue of the storage device.

Step 603: The storage device processes the second send queue, to send a read command in the second send queue to the host.

In this embodiment, the read command in the second send queue is generated and placed by software in the storage device. In a process in which the storage device sends a message to the host, the hardware (for example, a host bus adapter (host bus adapter, HBA)) in the storage device processes the message in the second send queue, to send a message in the first send queue. Specifically, the hardware in the storage device extracts the read command from the second send queue, and sends the read command to the host in a form of a packet. When there are a plurality of messages in the second send queue, the hardware in the storage device sequentially extracts the messages from the second send queue based on an order of the messages in the second send queue, and sends the messages.

Step 604: The host sends first data to the storage device, where the first data is data requested to be read by the read command.

After the host receives the read command sent by the storage device, the host analyzes the read command, and sends, to the storage device, the first data requested to be read by the read command.

Optionally, for the storage device, the queue pair to which the first send queue and the second send queue belong further includes a receive queue. The receive queue in the queue pair is used for receiving a message sent by the host, for example, the first data sent by the host in response to the foregoing read command.

Step 605: The storage device generates a read completion command and places the read completion command in the second send queue, where the read completion command indicates to complete reading of the first data.

After the storage device successfully receives the first data sent by the host, it indicates that the host has successfully written the first data into the storage device. Therefore, the storage device may feed back the read completion command to the host, to notify the host that reading of the first data is currently completed.

Because the read completion command is also the message related to data write, the storage device places the read completion command in the second send queue with a higher processing priority, to preferentially send the read completion command.

Step 606: The storage device processes the second send queue, to send the read completion command in the second send queue to the host.

In this embodiment, after the hardware in the storage device extracts the read completion command from the first send queue and sends the read completion command to the host via a network, an entire process of writing data by the host into the storage device is completed, to implement data write.

Step 607: The storage device receives a read request message from the host, where the read request message is used for requesting to read second data in the storage device.

In this embodiment, when the host needs to read data in the storage device, the host may send a read request message to the storage device, to request to read the second data in the storage device. The read request message may include a source address (that is, a storage address of the second data in the storage device) of the second data that needs to be read and a length of the second data.

Step 608: In response to the read request message, the storage device generates a write command and places the write command in the first send queue, where the write command carries the second data indicated by the read request message.

When receiving the read request message, the storage device may determine, in this device based on the read request message, the second data that the host needs to read. Then, in response to the read request message, the storage device generates a write command based on the second data. The write command carries the second data, and is used for requesting to write the second data carried in the write command into the host.

In other words, for the storage device, the storage device converts a data read operation performed by the host on the storage device into a data write operation performed by the storage device on the host. The data that the host requests to read is written into the host, so that a process in which the host reads data from the storage device is implemented.

In addition, after the storage device generates the write command, because the write command is a message related to data read, and the write command carries a large amount of data, the storage device places the write command in the first send queue with a lower processing priority, to avoid a case in which sending of the write command affects normal sending of the message related to data write.

Step 609: The storage device processes the first send queue, to send the write command in the first send queue to the host.

In this embodiment, after the storage device places the write command in the first send queue, the hardware in the storage device may send the write command in the first send queue based on the first send queue and the processing priority that is set for the first send queue. In a possible implementation, the processing priority of the second send queue may be an absolutely high priority. In other words, the processing priority of the second send queue is always higher than the processing priority of the first send queue. The storage device always preferentially sends a message in the second send queue when there is a to-be-sent message in the second send queue. In addition, the storage device sends a message in the first send queue only when there is no to-be-sent message in the second send queue.

In other words, the storage device processes the first send queue only when there is no to-be-sent message in the second send queue, to send the write command in the first send queue to the host.

In this solution, the processing priority of the second send queue is set to an absolutely high priority, so that it can be ensured that a message related to data write is always preferentially sent in various scenarios, to avoid a case in which a data write delay is affected by a data read delay, and ensure data write efficiency.

In another possible implementation, the processing priority of the second send queue may be a relatively high priority. Specifically, in a normal case, when there are to-be-sent messages in both the second send queue and the first send queue, the storage device preferentially sends the messages in the second send queue, and sends the message in the first send queue after all the messages in the second send queue are sent. In addition, when a data amount of messages continuously sent by the storage device in the second send queue reaches a specific data amount or time for continuously sending messages by the storage device in the second send queue reaches specific duration, and when there is a to-be-sent message in the first send queue, the storage device may temporarily stop sending the messages in the second send queue, and send the message in the first send queue, to avoid a case in which the message in the first send queue waits for excessively long time. For example, in a hybrid read/write scenario in which a data write amount is far greater than a data read amount, a message quantity in the second send queue is far greater than a message quantity in the first send queue. If it is set in such a manner that the messages in the second send queue are always preferentially sent, the message in the first send queue may need to wait for long time before being normally sent. Therefore, in this case, after the data amount of continuously sent messages in the second send queue reaches the specific data amount or the time for continuously sending messages in the second send queue reaches the specific duration, the storage device may send the message in the first send queue, to avoid a case in which a data read delay is greatly affected.

For example, for the write command in the first send queue, the storage device may process the first send queue when a data amount of continuously sent messages in the first send queue reaches a preset data amount or time for continuously sending messages in the first send queue reaches preset duration, to send the write command in the first send queue to the host. The preset data amount and the preset duration may be set or adjusted based on an actual application scenario. This is not specifically limited in embodiments.

In this solution, on the basis of ensuring that the messages in the second send queue are preferentially sent, the message in the first send queue is sent when the time for continuously sending the messages in the second send queue reaches the specific duration or the data amount of continuously sent messages in the second send queue reaches the specific data amount, to avoid a case in which the message in the first send queue waits for excessively long time, and ensure that a data read delay is not greatly affected.

It should be noted that the foregoing embodiment is described by using a procedure executed after the storage device receives one write request message and one read request message. In an actual application scenario, in a period of time, the storage device continuously receives a large quantity of write request messages and read request messages, generates corresponding access commands based on the write request messages and the read request messages, and respectively places the access commands in the first send queue and the second send queue. In other words, in most of time, there may be to-be-sent messages in both the first send queue and the second send queue. The storage device may send the messages in the first send queue and the second send queue according to the foregoing two implementations. In other words, when there are to-be-sent messages in both the first send queue and the second send queue, the storage device may always preferentially send the messages in the second send queue. The storage device may alternatively send the messages in the first send queue after time for continuously sending the messages in the second send queue reaches specific duration or a data amount of continuously sent messages in the second send queue reaches a specific data amount on basis of preferentially sending the messages in the second send queue.

In conclusion, in this embodiment, a first send queue and a second send queue with different processing priorities are set to respectively place different types of messages. In this case, in most cases, although an access command related to data write is placed in the send queue later than an access command related to data read, because the access command related to data write is placed in the send queue with a higher processing priority, it can also be ensured that the access command related to data write is preferentially sent, to ensure that a data write delay is not affected by a data read delay, and effectively improve data write efficiency.

It should be noted that the foregoing steps 601 to 606 are performed in sequence, and steps 607 to 609 are also performed in sequence. However, there is no specific sequence between steps 601 to 606 and steps 607 to 609.

In addition, in this embodiment, because two send queues with different processing priorities are created in a same queue pair, and a send queue with a higher processing priority is used for placing a message (that is, the read command) with a small data amount that is related to data write, creation of one more send queue does not occupy excessively many memory resources on the storage device. In comparison with creation of one more queue pair, memory resources can be effectively saved. In addition, because data amounts of messages that are related to data write and that are placed in the send queue with a higher processing priority are all small, a high sending delay is not generated when a message in the send queue is preferentially sent. Therefore, normal sending of a message (that is, a write request message) that is related to data read and that is in another send queue is not affected. When a data write delay is reduced, it is ensured that a data read delay is not affected.

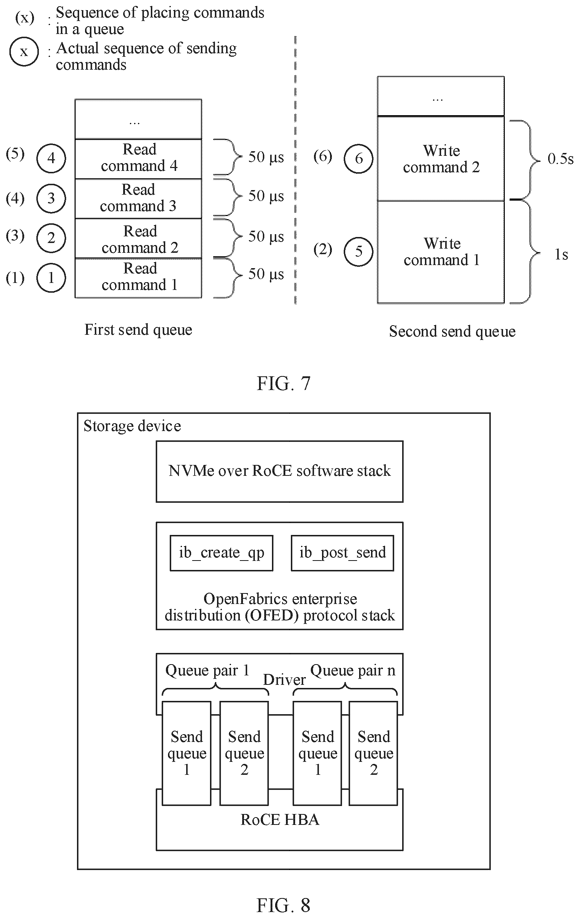

For example, FIG. 7 is a diagram of sending messages in a first send queue and a second send queue according to an embodiment of this application. As shown in FIG. 7, both the first send queue and the second send queue include a plurality of access commands. A read command 1, a read command 2, a read command 3, and a read command 4 are sequentially placed in the first send queue, and a write command 1 and a write command 2 are placed in the second send queue.

In a sequence of placing messages in queues, a storage device first places the read command 1 in the first send queue, places the write command 1 in the second send queue, then sequentially places the read command 2 to the read command 4 in the first send queue, and finally places the write command 2 in the second send queue. To be specific, the read command 1 is the first to be placed in the send queue, the write command 1 is the second to be placed in the send queue, the read command 2 to the read request 4 are the third to the fifth to be sequentially placed in the send queue, and the write command 2 is the sixth to be placed in the send queue.

Because a processing priority of the first send queue is higher than a processing priority of the second send queue, the storage device actually sends a message in the second send queue after sending a plurality of messages in the first send queue. Therefore, a message sending sequence is actually: the read command 1 -> the read command 2 -> the read command 3 -> the read command 4 -> the write command 1 -> the write command 2.

A sending delay of each read command in the first send queue is 50 µs. Therefore, time required for sending the read command 1 to the read command 4 in the first send queue is 200 µs. The write command 1 in the second send queue is actually placed in the send queue before the read command 2 to the read command 4, but actually the write command 1 is sent later than the read command 2 to the read command 4. However, because the sending delays of the read command 2 to the read command 4 are low (150 µs in total), a sending delay of the write command 1 is only increased by 150 µs on the basis of original 1s. However, the read command 2 to the read command 4 are sent before the write command 1, but a sending delay can be reduced by 1s, to greatly reduce a sending delay of the read command, and further improve data write efficiency.

The foregoing describes an execution process of the data read/write method provided in embodiments of this application. For ease of understanding, the following describes in detail, with reference to a specific example, an implementation process of the data read/write method provided in embodiments of this application in an actual application scenario.

FIG. 8 is a diagram of a system architecture of a storage device according to an embodiment of this application. As shown in FIG. 8, a storage device communicates with a host by using an NVMe over RoCE protocol, to implement data read/write on the storage device by the host. Specifically, the storage device includes an NVMe over RoCE software stack, an OpenFabrics enterprise distribution (OpenFabrics Enterprise Distribution, OFED) protocol stack, a driver, and a RoCE HBA.

The NVMe over RoCE software stack is a set of programs or components required for running an application, and is configured to implement a function of the NVMe over RoCE protocol.

The OFED protocol stack is an open-source software package set, including a kernel framework and a driver, a user framework and a driver, and various pieces of middleware and various test tools. Simply, the OFED protocol stack is a set of user-level interface programs including open-source software drivers, core kernel code, and middleware. In addition, in this example, the OFED protocol stack extends an ib_create_qp interface and an ib_post_send interface to support a multi-send queue mechanism. The ib_create_qp interface implements a multi-send queue configuration based on parameters (a quantity of send queues, a processing priority of each send queue, and a priority algorithm) provided by an application. The ib_post_send interface places to-be-sent messages in corresponding send queues based on a send queue specified by a service, so that the RoCE HBA sends corresponding messages to the host based on the processing priority of each send queue.

The driver works with the RoCE HBA to implement a configuration of the multi-send queue mechanism, so that each queue pair can be configured with a plurality of send queues, and a processing priority and a priority algorithm of each send queue can be configured.

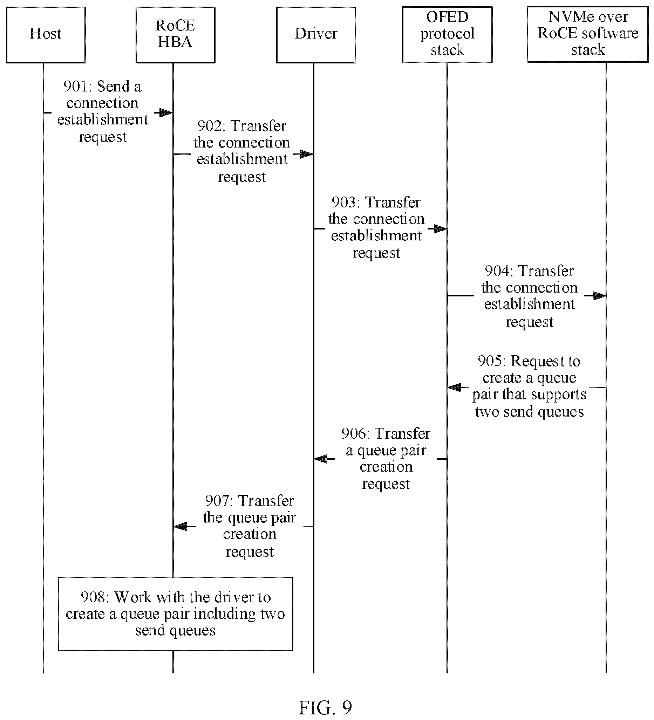

For example, FIG. 9 is a schematic flowchart of establishing a connection between a host and a storage device according to an embodiment of this application. As shown in FIG. 9, a process in which the host establishes the connection to the storage device includes the following steps 901 to 908.

Step 901: The host sends a connection establishment request to a RoCE HBA in the storage device.

First, before the host establishes the connection to the storage device, the host first sends the connection establishment request to the storage device via a communication network, to request to establish the connection to the storage device. After the host sends the connection establishment request to the storage device, the RoCE HBA in the storage device receives the connection establishment request.

Step 902: The RoCE HBA in the storage device transfers the connection establishment request to a driver.

Step 903: The driver transfers the connection establishment request to an OFED protocol stack.

Step 904: The OFED protocol stack transfers the connection establishment request to an NVMe over RoCE software stack.

After the RoCE HBA receives the connection establishment request, the RoCE HBA sequentially transfers the connection establishment request to the NVMe over RoCE software stack through the driver and the OFED protocol stack.

Step 905: The NVMe over RoCE software stack invokes an ib_create_qp interface in the OFED protocol stack, to request to create a queue pair that supports two send queues.

After the NVMe over RoCE software stack receives the connection establishment request, the NVMe over RoCE software stack invokes an extended ib_create_qp interface in the OFED protocol stack, to request to create the queue pair that supports two send queues.

In addition, when invoking the extended ib_create_qp interface in the OFED protocol stack, the NVMe over RoCE software stack may further specify processing priorities and priority algorithms of two send queues in a to-be-created queue pair. For example, the NVMe over RoCE software stack specifies that a processing priority of a first send queue is higher than a processing priority of a second send queue in the queue pair, and a priority algorithm of the first send queue is an absolute priority algorithm. In other words, the processing priority of the first send queue is always higher than that of the second send queue.

Step 906: The OFED protocol stack transfers a queue pair creation request to the driver.

Step 907: The driver transfers the queue pair creation request to the RoCE HBA.

Step 908: The RoCE HBA works with the driver to create, based on the queue pair creation request, a queue pair including two send queues.

Finally, when the RoCE HBA receives the queue pair creation request, the RoCE HBA works with the driver to create the queue pair. The queue pair created by the RoCE HBA and the driver may include two send queues and one receive queue.

In addition, when the NVMe over RoCE software stack specifies processing priorities and priority algorithms of the two send queues in the queue pair, the RoCE HBA and the driver may further configure a processing priority and a priority algorithm of each send queue in the queue pair when creating the queue pair.

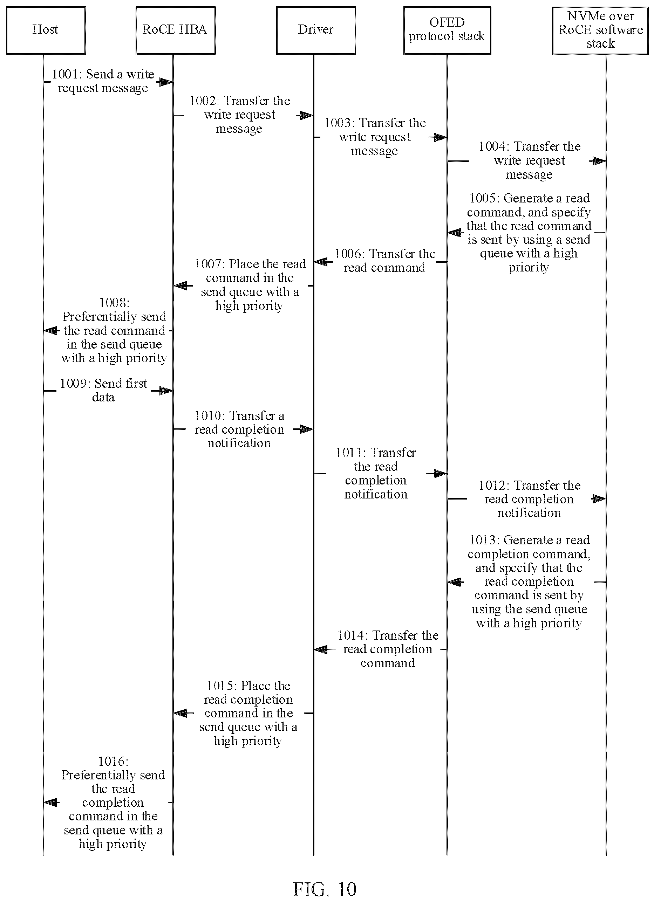

FIG. 10 is a schematic flowchart of writing data into a storage device by a host according to an embodiment of this application. As shown in FIG. 10, a process in which the host writes the data into the storage device includes the following steps 1001 to 1016.

Step 1001: The host sends a write request message to a RoCE HBA in the storage device, to request to write data into the storage device.

The write request message may include a source address of to-be-written data, a destination address of the to-be-written data, and a length of the to-be-written data.

Step 1002: The RoCE HBA in the storage device transfers the write request message to a driver.

Step 1003: The driver transfers the write request message to an OFED protocol stack.

Step 1004: The OFED protocol stack transfers the write request message to an NVMe over RoCE software stack.

After the RoCE HBA receives the write request message, the RoCE HBA sequentially transfers the write request message to the NVMe over RoCE software stack through the driver and the OFED protocol stack.

Step 1005: The NVMe over RoCE software stack generates a read command based on the write request message, and invokes an ib_post _send interface in the OFED protocol stack to specify that the read command is sent by using a send queue with a high priority.

After the NVMe over RoCE software stack receives the write request message, the NVMe over RoCE software stack generates the read command. The read command is used for requesting to read data indicated in the write request message, in other words, read data that is in the host and that is to be written into the storage device.

In addition, the NVMe over RoCE software stack may invoke the ib_post_send interface in the OFED protocol stack, and specify that the read command is sent by using a send queue with a high priority in a queue pair.

Step 1006: The OFED protocol stack transfers the read command to the driver.

When the OFED protocol stack transfers the read command, the OFED protocol stack further indicates the driver to place the read command in the send queue with a high priority.

Step 1007: The driver places the read command in the send queue with a high priority.

When the driver receives the read command, the driver may place the read command in the send queue with a high priority based on an indication of the OFED protocol stack.

Step 1008: The RoCE HBA preferentially sends the read command in the send queue with a high priority.

For two send queues in a same queue pair, the RoCE HBA preferentially sends the read command in the send queue with a high priority to the host.

Step 1009: The host sends first data to the RoCE HBA in the storage device.

The first data is data that the host needs to write into the storage device. After receiving the read command sent by the storage device, the host sends the first data to the storage device.

Step 1010: The RoCE HBA transfers a read completion notification to the driver.

After the RoCE HBA in the storage device successfully receives the first data sent by the host, the RoCE HBA may generate the read completion notification. The read completion notification indicates that the first data sent by the host is successfully received. In addition, the RoCE HBA further transfers the read completion notification to the driver, so that the RoCE HBA is finally transferred to the NVMe over RoCE software stack.

Step 1011: The driver transfers the read completion notification to the OFED protocol stack.

Step 1012: The OFED protocol stack transfers the read completion notification to the NVMe over RoCE software stack.

Step 1013: The NVMe over RoCE software stack generates a read completion command based on the read completion notification, and invokes the ib_post_send interface in the OFED protocol stack, to specify that the read completion command is sent by using the send queue with a high priority.

The read completion command is used for notifying the host that the storage device has currently completed reading of the first data.

Step 1014: The OFED protocol stack transfers the read completion command to the driver.

When the OFED protocol stack transfers a read request message, the OFED protocol stack further indicates the driver to place the read completion command in the send queue with a high priority.

Step 1015: The driver places the read completion command in the send queue with a high priority.

Step 1016: The RoCE HBA preferentially sends the read completion command in the send queue with a high priority.

For two send queues in a same queue pair, the RoCE HBA also preferentially sends the read completion command in the send queue with a high priority to the host. After the RoCE HBA successfully sends the read completion command to the host, a data write process is completed.

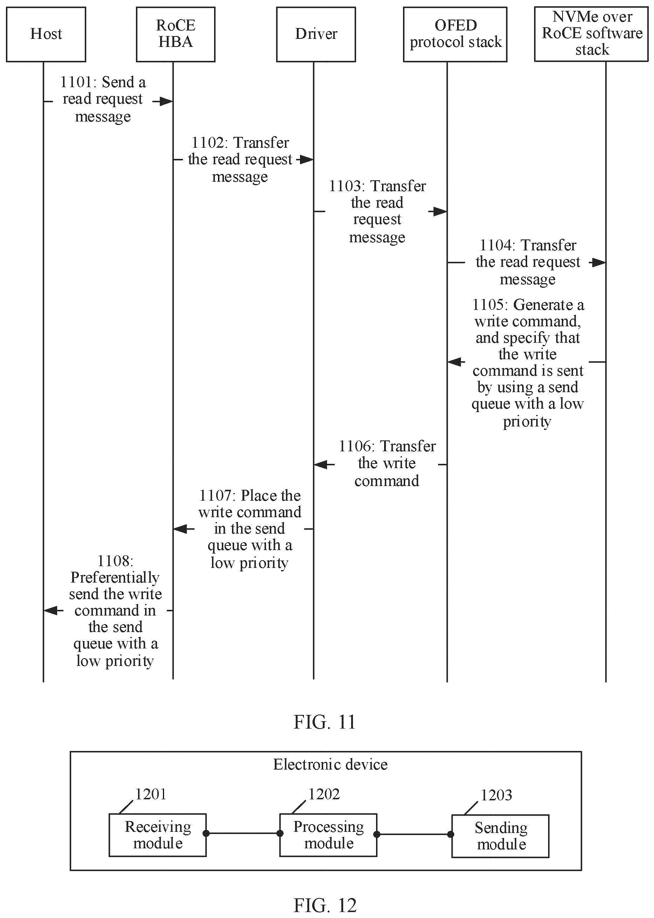

FIG. 11 is a schematic flowchart of reading data in a storage device by a host according to an embodiment of this application. As shown in FIG. 11, a process in which the host reads the data in the storage device includes the following steps 1101 to 1108.

Step 1101: The host sends a read request message to a RoCE HBA in the storage device, to request to read second data in the storage device.

The read request message may include a source address (that is, a storage address of the second data in the storage device) of the second data that needs to be read and a length of the second data.

Step 1102: The RoCE HBA in the storage device transfers the read request message to a driver.

Step 1103: The driver transfers the read request message to an OFED protocol stack.

Step 1104: The OFED protocol stack transfers the read request message to an NVMe over RoCE software stack.

After the RoCE HBA receives the read request message, the RoCE HBA sequentially transfers the read request message to the NVMe over RoCE software stack through the driver and the OFED protocol stack.

Step 1105: The NVMe over RoCE software stack generates a write command based on the read request message, and invokes an ib_post _send interface in the OFED protocol stack to specify that the write command is sent by using a send queue with a low priority.

After the NVMe over RoCE software stack receives the read request message, the NVMe over RoCE software stack generates the write command. The read request message includes the second data that the host requests to read, and the read request message is used for requesting to write the second data into the host.

In addition, the NVMe over RoCE software stack may invoke the ib_post_send interface in the OFED protocol stack, and specify that the write command is sent by using a send queue with a low priority in a queue pair.

Step 1106: The OFED protocol stack transfers the write command to the driver.

When the OFED protocol stack transfers the write command, the OFED protocol stack further indicates the driver to place the write command in the send queue with a low priority.

Step 1107: The driver places the write command in the send queue with a low priority.

When the driver receives the write command, the driver may place the write command in the send queue with a low priority based on an indication of the OFED protocol stack.

Step 1108: The RoCE HBA sends the write command in the send queue with a low priority.

For two send queues in a same queue pair, after sending of a message in a send queue with a high priority is completed, the RoCE HBA sends a write command in a send queue with a low priority to the host, to ensure that a read command in the send queue with a high priority is not affected by a sending delay of the write command.

The foregoing describes the method provided in embodiments of this application. For ease of understanding, the following describes an apparatus configured to perform the method in the foregoing embodiments.

FIG. 12 is a diagram of a structure of a storage device according to an embodiment of this application. As shown in FIG. 12, the storage device includes a receiving module 1201, configured to receive a first access command, where the first access command is a write command; and
a processing module 1202, configured to place the first access command in a first send queue.

The receiving module 1201 is further configured to receive a second access command, where the second access command is a non-write command.

The processing module 1202 is further configured to place the second access command in a second send queue, where a processing priority of the second send queue is higher than a processing priority of the first send queue.

In a possible implementation, the first access command and the second access command are RoCE access commands.

In a possible implementation, the first send queue and the second send queue belong to a same send queue pair.

In a possible implementation, the first access command includes first data, and the first access command is used for requesting to write the first data.

In a possible implementation, the second access command is used for requesting to read data; or
the second access command indicates to complete data read.

In a possible implementation, the apparatus further includes: a sending module 1203, configured to send content in the first send queue when there is no to-be-sent content in the second send queue.

In a possible implementation, the apparatus further includes: a sending module 1203, configured to send the content in the first send queue when a data amount of continuously sent content in the second send queue reaches a preset data amount or time for continuously sending content in the second send queue reaches preset duration.

In a possible implementation, the receiving module 1201 is further configured to receive a connection establishment request, where the connection establishment request is used for requesting to establish a connection.

The processing module 1202 is further configured to: in response to the connection establishment request, create the first send queue and the second send queue, and configure the processing priority of the second send queue to be higher than the processing priority of the first send queue.

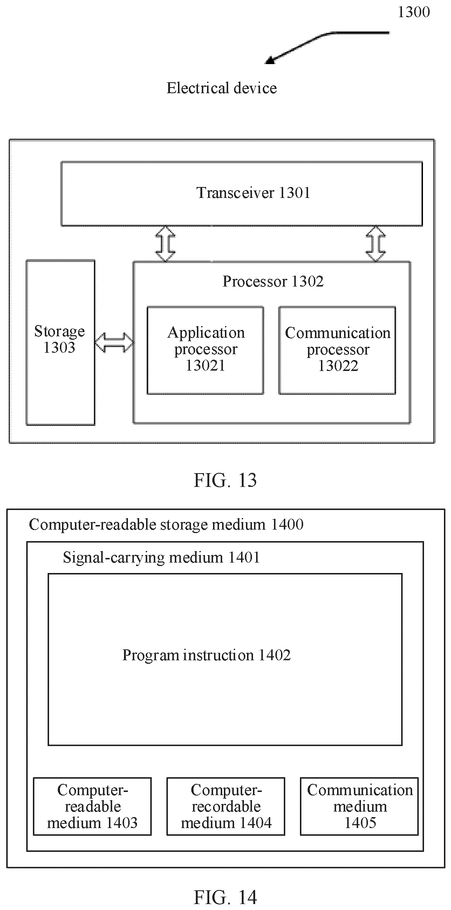

FIG. 13 is a diagram of a structure of an electronic device according to an embodiment of this application. Specifically, the electronic device 1300 includes a transceiver 1301, a processor 1302, and a storage 1303 (where there may be one or more processors 1302 in the electronic device 1300, and one processor is used as an example in FIG. 13). The processor 1302 may include an application processor 13021 and a communication processor 13022. In some embodiments of this application, the transceiver 1301, the processor 1302, and the storage 1303 may be connected via a bus or in another manner.

The storage 1303 may include a read-only memory and a random access memory, and provides instructions and data to the processor 1302. A part of the storage 1303 may further include a non-volatile random access memory (non-volatile random access memory, NVRAM). The storage 1303 stores the processor and operation instructions, an executable module or a data structure, a subset thereof, or an extended set thereof. The operation instructions may include various operation instructions used for implementing various operations.

The processor 1302 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are marked as the bus system.

The method disclosed in embodiments of this application is applicable to the processor 1302, or may be implemented by the processor 1302. The processor 1302 may be an integrated circuit chip and has a signal processing capability. In an implementation process, steps in the foregoing methods can be completed by using a hardware integrated logical circuit in the processor 1302, or by using instructions in the form of software. The processor 1302 may be a general-purpose processor, a digital signal processor (digital signal processor, DSP), a microprocessor or a microcontroller. The processor 1302 may further include an application-specific integrated circuit (application-specific integrated circuit, ASIC), a field-programmable gate array (field-programmable gate array, FPGA) or another programmable logic device, a discrete gate or transistor logic device, and a discrete hardware component. The processor 1302 may implement or perform the methods, steps, and logic block diagrams disclosed in embodiments of this application. The general-purpose processor may be a microprocessor, or the processor may be any conventional processor or the like. The operations of the methods disclosed with reference to embodiments of this application may be directly performed and completed by using a hardware decoding processor, or may be performed and completed by using a combination of hardware and software modules in the decoding processor. The software module may be located in a storage medium that is mature in the art, such as a random access memory, a flash memory, a read-only memory, a programmable read-only memory, an electrically erasable programmable memory, or a register. The storage medium is located in the storage 1303, and the processor 1302 reads information in the storage 1303 and completes the steps in the foregoing methods in combination with hardware in the processor 1302.

The transceiver 1301 (for example, a network adapter) may be configured to receive inputted digital or character information, and generate a signal input related to a related setting and function control of the electronic device. The transceiver 1301 may be further configured to output digit or character information through a first interface, and send instructions to a disk group through the first interface, to modify data in the disk group. The transceiver 1301 may further include a display device such as a display screen.

In this embodiment of this application, in one case, the processor 1302 is configured to perform the method performed by the electronic device in the embodiment corresponding to FIG. 5.

FIG. 14 is a diagram of a structure of a computer-readable storage medium according to an embodiment of this application. This application further provides a computer-readable storage medium. In some embodiments, the method disclosed in FIG. 5 may be implemented as computer program instructions encoded on the computer-readable storage medium in a machine-readable format or encoded on another non-transitory medium or product.

FIG. 14 schematically shows a conceptual partial view of an example computer-readable storage medium arranged according to at least some embodiments shown herein, and the example computer-readable storage medium includes a computer program for executing a computer process on a computing device.

In an embodiment, a computer-readable storage medium 1400 is provided by using a signal-carrying medium 1401. The signal-carrying medium 1401 may include one or more program instructions 1402, and when the one or more program instructions 1402 are run by one or more processors, the foregoing functions or some functions described in FIG. 5 may be provided. In addition, the program instructions 1402 in FIG. 14 are also described as example instructions.

In some examples, the signal-carrying medium 1401 may include a computer-readable medium 1403, for example, but not limited to, a hard disk drive, a compact disc (CD), a digital video disc (DVD), a digital tape, a storage, a ROM, or a RAM.

In some implementations, the signal-carrying medium 1401 may include a computer-recordable medium 1404, for example, but not limited to, a storage, a read/write (R/W) CD, or an R/W DVD. In some implementations, the signal-carrying medium 1401 may include a communication medium 1405, for example, but not limited to, a digital and/or analog communication medium (for example, an optical cable, a waveguide, a wired communication link, or a wireless communication link). Therefore, for example, the signal-carrying medium 1401 may be delivered through the communication medium 1405 (for example, a wireless communication medium complying with the IEEE 802.X standard or another transmission protocol) in a wireless form.

The one or more program instructions 1402 may be, for example, computer-executable instructions or logic implementation instructions. In some examples, the computing device may be configured to provide various operations, functions, or actions in response to the program instructions 1402 that are delivered to the computing device by using one or more of the computer-readable medium 1403, the computer-recordable medium 1404, and/or the communication medium 1405.

In addition, it should be noted that the apparatus embodiments described above are merely examples. The units described as separate parts may or may not be physically separate, and parts displayed as units may or may not be physical units, in other words, may be located at one position, or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, and the communication connections may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by corresponding hardware. Moreover, a specific hardware structure for achieving a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technologies may be implemented in the form of a software product. A computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, a network device, or the like) to perform the methods in various embodiments of this application.

All or some of the foregoing embodiments may be implemented by using software, hardware, firmware, or any combination thereof. When software is used for implementing embodiments, all or some of embodiments may be implemented in the form of a computer program product.

The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD), or the like.

## Claims

1. A data read/write method, wherein the method comprises:
receiving a first access command, and placing the first access command in a first send queue, wherein the first access command is a write command;
receiving a second access command, wherein the second access command is a non-write command; and
placing the second access command in a second send queue, wherein a processing priority of the second send queue is higher than a processing priority of the first send queue.

2. The method according to claim 1, wherein the first access command and the second access command are remote direct memory access over converged Ethernet RoCE access commands.

3. The method according to claim 1 or 2, wherein the first send queue and the second send queue belong to a same send queue pair.

4. The method according to any one of claims 1 to 3, wherein the first access command comprises first data, and the first access command is used for requesting to write the first data.

5. The method according to any one of claims 1 to 4, wherein the second access command is used for requesting to read data; or
the second access command indicates to complete data read.

6. The method according to any one of claims 1 to 5, wherein the method further comprises:
sending content in the first send queue when there is no to-be-sent content in the second send queue.

7. The method according to any one of claims 1 to 5, wherein the method further comprises:
sending content in the first send queue when a data amount of continuously sent content in the second send queue reaches a preset data amount or time for continuously sending content in the second send queue reaches preset duration.

8. The method according to any one of claims 1 to 7, wherein the method further comprises:
receiving a connection establishment request, wherein the connection establishment request is used for requesting to establish a connection; and
in response to the connection establishment request, creating the first send queue and the second send queue, and configuring the processing priority of the second send queue to be higher than the processing priority of the first send queue.

9. A data read/write apparatus, comprising:
a receiving module, configured to receive a first access command, wherein the first access command is a write command; and
a processing module, configured to place the first access command in a first send queue, wherein
the receiving module is further configured to receive a second access command, wherein the second access command is a non-write command; and
the processing module is further configured to place the second access command in a second send queue, wherein a processing priority of the second send queue is higher than a processing priority of the first send queue.

10. The apparatus according to claim 9, wherein the first access command and the second access command are RoCE access commands.

11. The apparatus according to claim 9 or 10, wherein the first send queue and the second send queue belong to a same send queue pair.

12. The apparatus according to any one of claims 9 to 11, wherein the first access command comprises first data, and the first access command is used for requesting to write the first data.

13. The apparatus according to any one of claims 9 to 12, wherein the second access command is used for requesting to read data; or
the second access command indicates to complete data read.

14. The apparatus according to any one of claims 9 to 13, further comprising: a sending module, configured to send content in the first send queue when there is no to-be-sent content in the second send queue.

15. The apparatus according to any one of claims 9 to 13, further comprising: a sending module, configured to send content in the first send queue when a data amount of continuously sent content in the second send queue reaches a preset data amount or time for continuously sending content in the second send queue reaches preset duration.

16. The apparatus according to any one of claims 9 to 15, wherein
the receiving module is further configured to receive a connection establishment request, wherein the connection establishment request is used for requesting to establish a connection; and
the processing module is further configured to: in response to the connection establishment request, create the first send queue and the second send queue, and configure the processing priority of the second send queue to be higher than the processing priority of the first send queue.

17. An electronic device, comprising a storage medium and a processor, wherein the storage medium stores code, the processor is configured to execute the code, and when the code is executed, the electronic device performs the method according to any one of claims 1 to 8.

18. A computer storage medium, wherein the computer storage medium stores instructions, and when the instructions are executed by a computer, the computer is enabled to implement the method according to any one of claims 1 to 8.

19. A computer program product, wherein the computer program product stores instructions, and when the instructions are executed by a computer, the computer is enabled to implement the method according to any one of claims 1 to 8.
